# EUROPEAN PATENT APPLICATION

(11) **EP 4 149 059 A1**
(43) Date of publication of application: **15.03.2023**
(21) Application number: 21826541.1
(22) Date of filing: 10.06.2021
(51) Int. Cl.: H04L 12/24

(54) **ALARM MINING MODEL DETERMINATION METHOD AND APPARATUS, DEVICE AND STORAGE MEDIUM**

(30) Priority: 16.06.2020 CN 202010549255
(71) Applicant: ZTE Corporation, Shenzhen, Guangdong 518057 (CN)
(72) Inventor: JIANG, Lei, Shenzhen, Guangdong 518057 (CN); CHEN, Jian, Shenzhen, Guangdong 518057 (CN); ZHAO, Song, Shenzhen, Guangdong 518057 (CN); YI, Ming, Shenzhen, Guangdong 518057 (CN)
(74) Representative: Savi, Massimiliano
(86) International application number: PCT/CN2021/099363
(87) International publication number: WO 2021/254244

(57) **Abstract**

An alarm mining model determination method and apparatus, a device and a storage medium. Said method comprises: performing mining on training data according to initial full mining parameters to obtain all alarm correlation sets (S101); then, marking a designated alarm according to a rule base and all alarm correlation sets (S102); performing designated alarm mining according to test data and the marked designated alarm (S 103); and if a mining result satisfies a convergence condition, generating an alarm mining model (S104).

## Description

### CROSS-REFERENCE TO RELATED APPLICATION

This application is filed on the basis of the Chinese patent application No. 202010549255.9 filed June 16, 2020, and claims priority of the Chinese patent application, the entire contents of which are incorporated herein by reference.

### TECHNICAL FIELD

The present disclosure relates to the field of data analysis and processing, in particular to a method and an apparatus for determining an alarm mining model, a device, and a storage medium.

### BACKGROUND

In the field of communication, communication equipment tends to generate a large number of alarms, such as equipment alarms, service alarms, single-domain alarms, cross-domain and cross-vendor alarms, etc. Root cause relationships are present behind various kinds of alarms, so fault location, alarm merging and alarm compression can be carried out by determining the root cause relationships.

At present, the determination of the root cause relationships is performed by acquisition of the association relations through frequent set mining, and subsequent reference to human experience knowledge base and factors like network topology relationship and service relationship. During mining, it is necessary to specify mining configuration parameters, such as algorithm selection parameters, result pruning parameters and mining parameters. However, in the scenario of the 5th generation (5G) wireless communication systems, the effectiveness of the alarm correlations acquired by mining through the traditional methods of setting the configuration parameters of alarm mining will be greatly reduced due to the multi-level services, application diversity and nonlinear increasing network complexity. Moreover, all alarm data, after being mined, shall be subjected to evaluation based on the frequent set model, and some alarms occur less frequently among the alarms to be focused on. If the mining configuration parameters, such as support, confidence and time window, are set relatively wide, there will be more redundant relationships when more associations are mined.

### SUMMARY

There are provided a method and an apparatus for determining an alarm mining model, a device, and a storage medium in various embodiments of the present disclosure.

An embodiment of the present disclosure provides a method for determining an alarm mining model, which includes, mining training data according to an initial parameter of full-scale mining to acquire a set of all alarm correlation relations; marking a specified alarm according to a rule base and the set of all alarm correlation relations; performing a specified alarm mining according to test data and the marked specified alarm; and generating an alarm mining model in response to a result of mining meeting a convergence condition.

An embodiment of the present disclosure further provides an apparatus for determining an alarm mining model, which includes, a mining module configured to mine training data according to an initial parameter of full-scale mining to acquire a set of all alarm correlation relations; a marking module configured to mark a specified alarm according to a rule base and the set of all alarm correlation relations; the mining module further being configured to perform a specified alarm mining according to test data and a marked specified alarm; and a generating module configured to generate an alarm mining model in response to a result of mining meets a convergence condition.

An embodiment of the present disclosure further provides a device, which includes, a processor, a memory storing thereon a program executable by the processor, and a data bus for implementing connecting communication between the processor and the memory, in which the program, when executed by the processor, causes the processor to carry out the method as described above.

An embodiment of the present disclosure further provides a readable and writable storage medium for computer storage, in which the storage medium stores at least one program executable by at least one processor which, when executed by the processor, causes the processor to carry out the method as described above.

### BRIEF DESCRIPTION OF DRAWINGS

FIG. 1 depicts a flowchart showing a method for determining an alarm mining model according to an embodiment of the present disclosure;
FIG. 2 depicts a schematic diagram showing an apparatus for determining an alarm mining model according to an embodiment of the present disclosure; and
FIG. 3 depicts a schematic diagram showing a device according to an embodiment of the present disclosure.

### DETAILED DESCRIPTION

Some embodiments of the present invention will be described with detail below in conjunction with the accompanying drawings in order to illustrate the purpose, technical scheme and advantages of the present disclosure. It should be noted that various embodiments in the present disclosure and the features in the embodiments can be combined with each other without conflict.

In addition, in various embodiments of present disclosure, words such as "optionally" or "exemplarily" are intended to mean examples, illustrations or explanations. Any embodiment or design described as "optional" or "exemplary" in the present disclosure should not be interpreted as being superior to or advantageous over another embodiment or design. Specifically, the use of words such as "optionally" or "exemplarily" is intended to present related concepts in a specific manner.

In order to illustrate the technical scheme as provided in various embodiments of the present disclosure, some concepts set forth in the present disclosure are illustrated for reference as follows.

Full-scale mining: mining all the alarm data to acquire the correlation relations. For example, a disconnection of a Remote Radio Unit (RRU) link leads to a cell out of service, and a clock abnormality in a single board of a base station leads to a cell out of service, or the like, in which, the disconnection of the RRU link occurs frequently while the clock abnormality in a single board of a base station occurs less frequently.

Specified alarm mining: mining the alarms that are of great concern. For example, the alarms related to such as failures in service of cells or base stations which have a great impact on network operations are mined merely.

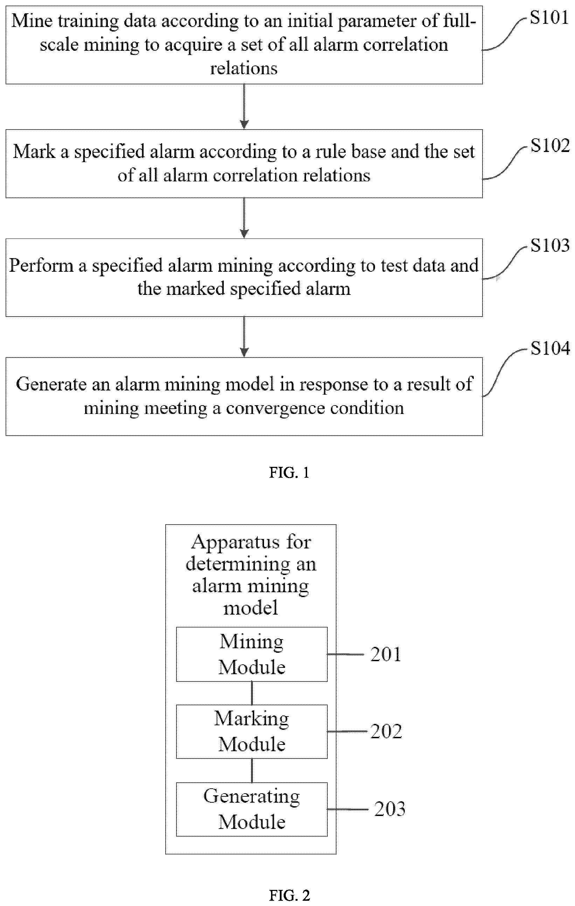

On the basis of the above concepts, an embodiment of the present disclosure provides a method for determining an alarm mining model, as shown in FIG. 1, the method includes the following operations.

At S101, training data is mined according to an initial parameter of full-scale mining to acquire a set of all alarm correlation relations.

In some embodiments of the present disclosure, the alarm data can be cleaned before mining. For example, the alarm data with no apparent topological network element location, the alarm data with unclear service or the alarm data with no alarm ID can be filtered, while the alarm data with service confirmation and alarm ID can be kept. For example, the ID of "base station out of service" alarm is 1001-11, the ID of "cell out of service" alarm is 1003-12, and the ID of "network element disconnection" alarm is 1005-13, or the like. That is, in various embodiments of the present disclosure, each alarm has a respective ID.

In addition, in some embodiments of the present disclosure, the training data is a part of the alarm data, and the alarm data also includes test data.

In an implementation, the alarm data can be partitioned according to the scale and time of the alarm data. For example, 60% of the alarm data is utilized as training data, that is, the ratio of the total amount of training data to the total amount of test data is 3:2.

It should be noted that, in order to ensure the correlation of the alarms across the period of time, the alarm time of training data and test data should be roughly continuous and not separated too far. For example, the alarm data from May to September can be partitioned by month or week, but not by morning, afternoon or smaller period.

The initial full mining parameters in the operation as described above can be a time window and a first mining parameter, where the first mining parameter can be support and/or confidence.

The values of the initial mining parameters can be initially set values. For example, the initial value of the time window is 10 minutes, the initial value of the support is 0.005, and the initial value of the confidence value is 0.065. It is apparent that, the numerical range of the mining parameters can also be set in some embodiment of the present disclosure. For example, the maximum value of time window is 40 minutes, the minimum value of support is 0.001, and the minimum value of confidence is 0.002.

In an implementation of the present application, the training data can be mined by means of the FP-Growth algorithm, so as to acquire the set of all alarm correlation relations.

At S102, a specified alarm is marked according to a rule base and a set of all alarm correlation relations.

The rule base in this operation can be a rule base composed of the effective correlation relations and root cause relationships identified by experts. The rule base can be any one of the existing rule bases.

After the set of all alarm correlation relations is acquired based on S101, the set can be compared with the correlation between faults and alarms stored in the rule base to determine the mined alarms and the unmined alarms, which are the result of the full-scale mining. On this basis, the mined specified alarms and the unmined specified alarms are marked according to the specified alarm and the result of the full-scale mining. In an example where the specified alarm is "cell out of service", and the correlation relations stored in the rule base are "cell out of service-RRU link disconnection" and "cell out of service-clock abnormality in single board of base station", and during full-scale mining at S101, "cell out of service-RRU link disconnection" is mined, but "cell out of service-clock abnormality in single board of base station" is not mined, then "cell out of service-RRU link disconnection" is marked as a mined specified alarm, and "cell out of service-clock abnormality in single board of base station" is marked as an unmined specified alarm.

In an implementation, the mined specified alarm is set to "1", and the unmined specified alarm is set to "0". That is, "cell out of service-RRU link disconnection" is marked as "1", and "cell out of service-clock abnormality in single board of base station" is marked as "0". It is apparent that, those skilled in the art can perform the marking to distinguish the mined and unmined specified alarms in an alternative manner, and it is not intended to limit this in the present disclosure.

At S103, a specified alarm mining is performed according to test data and the marked specified alarm.

By means of the marking of the specified alarms at S102, the mined and unmined specified alarms are identified. On this basis, the specified alarm mining is performed iteratively in conjunction with the test data, such that, the certainty is continuously enhanced as the mining proceeds, and better correlation relations of the alarms is acquired.

At S104, an alarm mining model is generated when the result of the mining meets a convergence condition.

The specified alarm mining is performed iteratively. After repeated mining for several times, if the result of the mining meets the convergence condition, the alarm mining model can be generated according to the mining parameters corresponding to the result of the mining.

The alarm mining model can be applied to determine the subsequent alarm correlation relations. For example, for new data, the configured mining parameters are acquired from different operators, and full-scale mining and specified alarm mining are performed in conjunction with the alarm mining model, to acquire correlation relations of the specified alarm.

According to this embodiment of the present disclosure, training data is mined according to a plurality of initial full-scale mining parameters to acquire a set of all alarm correlation relations. On this basis, a specified alarm is marked according to a rule base and a set of all alarm correlation relations, and a specified alarm mining is performed according to test data and the marked specified alarm. And an alarm mining model is generated when the result of the mining meets a convergence condition. Thereby, based on full-scale mining, the specified alarm mining is marked. On this basis, analysis and iteration are performed such that, the certainty of the alarm correlation relations is continuously enhanced, and the alarm mining model is acquired in a smart manner.

In an embodiment, the process of specified alarm mining as described in S 103 includes, but is not limited to, the following operations.

Operation 1, an initial value of a mining parameter of a marked specified alarm is determined, and the initial value of a mining parameter is taken as the current value of the mining parameter.

The initial value of a mining parameter in this operation can be the value of the first mining parameter (i.e., the value of support and/or confidence) and the value of the time window.

In an implementation, the determination of the initial value of a mining parameter is performed with the following procedure, in which, the values of the first mining parameters of the mined specified alarm and unmined specified alarm are determined, a value of the time window of the unmined specified alarm is calculated, and the initial value of a mining parameter of the marked specified alarm is determined according to the values of the first mining parameters, the calculated time window, and the value of the time window of the mined specified alarm, where the first mining parameter is the support and/or the confidence, and the value of the time window of the mined specified alarm is the initial setting value.

Further illustration for the implementation of the determination of the initial value of a mining parameter will be provided below.

In case that the mined specified alarm is marked as "1", the unmined specified alarm is marked as "0", the first mining parameters of the specified alarms marked as "1" and "0" (that is, all specified alarms) are acquired according to the frequent set mining algorithm, the value of the time window of the specified alarm marked as "0" is calculated, and the value of the time window of the specified alarm marked as "1" is set as the initial setting value. A specified alarm can result from several faults, that is, a specified alarm can have corresponding relations with several faults. For example, both the RRU link disconnection and the abnormal clock of the single board of the base station can cause a cell out of service. And thus, the first mining parameter of each corresponding relationship of the specified alarm can be acquired during the specified mining, and then the first mining parameter having the smallest value can be served as the first mining parameter of the specified alarm. It is apparent that, if the specified alarm has only one corresponding first mining parameter, the only one first mining parameter can be directly determined as the first mining parameter of the specified alarm.

In addition, the time window of each specified alarm can be calculated based on the initial setting value of the time window of the mined specified alarm and the calculated value of the time window of the unmined specified alarm. For example, according to the setting value of the time window of the mined "cell out of service-RRU link disconnection" and the calculated value of the time window of the unmined "cell out of service-clock abnormality in single board of base station", the value of the maximum time window of the specified alarm "cell out of service" is determined and served as the mining time window of the specified alarm, then the mining time window and the first mining parameter(s) as described above are the initial mining parameters of the specified alarm "cell out of service".

In the same way, after the initial mining parameter values of each specified alarm are acquired (that is, the specified alarms marked as "1" and "0"), the respective initial mining parameter values are served as the current mining values of each specified alarm so as to perform the specified alarm mining.

Operation 2, the specified alarm mining is performed according to the current value of the mining parameter and the test data to acquire a set of correlation relations of the specified alarm.

Operation 3, a marker of the specified alarm is updated according to the set of specified alarm correlation relations and the correlation relations between the faults and the alarms in the rule base.

After the set of specified alarm correlation relations corresponding to the current mining parameters is acquired according to the operations as described above, the set can be compared with the correlation relations between faults and alarms in the rule base. Since the current mining parameters are re-determined, the set of specified alarm correlation relations corresponding to the current mining parameters will also change. Therefore, when the set is compared with the rule base, the result of the specified alarm mining will also change, that is, the marker of the specified alarm shall be updated, and the mined specified alarm and the unmined specified alarm shall be redetermined.

Operation 4, the current mining parameters of the specified alarm are determined according to the updated marker of the specified alarm.

There can be two cases in the updated markers of the specified alarms. Case one is that "1" and "0" are present in the markers, which indicates the presence of unmined specified alarm in the specified alarms. Case two is that all the markers are "1", which indicates all the specified alarms are mined.

Different methods for adjusting mining parameter adjustment are designed for the two different cases in some embodiments of the present disclosure. For example, in case one, the current mining parameter of the specified alarm can be determined according to a negative direction. In case two, the mining parameters of the specified alarm are determined according to a positive direction.

The negative direction indicates a decrease in the first mining parameter according to a preset step size and an increase in the value of the time window according to a preset time, while the positive direction indicates an increase in the first mining parameter according to a preset step size and a decrease in the value of time window according to a preset time.

That is, for the presence of unmined specified alarm in the mined specified alarms, the value of the time window can be increased, and the support and/or confidence can be decreased, so that the specified alarm mining can be carried out again with the re-adjusted mining parameters. For an absence of unmined specified alarm in the mined specified alarms, the value of time window can be decreased, and the support and/or confidence can be increased, and the mining can be carried out again through the adjusted mining parameters, so as to minimize the redundant information in the result of the mining.

Operations 2 to 4 are repeated until all the specified alarms meet the convergence conditions.

Operations 2 to 4 as described above are repeated, and the specified alarm mining is carried out continuously in an iterative manner. The mining parameters are adjusted according to the marked result of the mining during the mining. Thereby the mining certainty can be continuously enhanced during mining until all the specified alarms meet the convergence condition.

In an implementation, the convergence condition as described above can be any one of the following judging conditions.

Condition 1: The markers of the last specified alarm mining are all markers of the mined specified alarms, and markers of the unmined specified alarm are present in the current specified alarm mining.

After several times of mining, if all the markers in the result of the last mining are "1", that is, all the specified alarms have been mined, while markers of the unmined specified alarm are present in the result of the current specified alarm mining, it means that the result of the last mining is the optimal result, and the mining parameters corresponding to the last mining are also the optimal mining parameters for specified alarms.

Condition 2: The markers of unmined specified alarms are present in the markers of specified alarms in the last mining, and markers of the specified alarm in the current mining are all markers of mined specified alarms.

In contrast to the above condition 1, after several times of mining, if markers of unmined specified alarms are present in the result of the last specified alarm mining, while the result of the current mining shows that all the specified alarms have been mined, it indicates that the result of the current mining is the optimal result, and it is unnecessary to adjust the mining parameters anymore, so the mining parameters of the current mining can be determined as the optimal mining parameters.

Condition 3: the number of times of specified alarm mining or the mining parameters of specified alarms are greater than the corresponding threshold.

The initial values and adjustment ranges of each parameter are preset. For example, the initial value of time window is 10 minutes, the initial value of support is 0.005, the initial value of confidence is 0.065, the maximum value of time window is 40 minutes, the minimum value of support is 0.001 and the minimum value of confidence is 0.002. When adjusting the first mining parameter and the time window in the positive or negative direction as described above, in case that the preset step size is 0.001 and the preset time is 5 minutes, then adjustments can be made on the basis of the initial value of each parameter according to the preset step size and the preset time. For example, the time window is initially set to 20 minutes, and after the time window is adjusted once in the negative direction, the adjusted time window becomes 25 minutes. Likewise, the support is initially set to 0.003 and the confidence is initially set to 0.063, and after the first mining parameters are adjusted once in the positive direction, the support becomes 0.004, and the confidence becomes 0.064. It is apparent that, those having ordinary skills in the art can also respectively set the step sizes of adjustment for the support and the confidence to different values, and it is not intended to limit this in the embodiments of the present disclosure.

As in the above implementation, if the above conditions 1 and 2 are not met, that is, the result of the mining is not the optimal result, and if the number of times of the mining or related parameters meets the above conditions 3, the mining will be considered to be converged and the mining will be terminated.

In an embodiment, the specified alarm mining at S104 as described above includes, but is not limited to, the following operations. When the result of mining meets the above condition 1 or condition 2, since the optimal results and the optimal mining parameters have been acquired, thus the alarm mining model can be generated according to the current mining parameters corresponding to the result that the markers of specified alarms are all markers of mined specified alarms, that is, the alarm mining model can be generated according to the optimal mining parameters.

Alternatively, under the condition that the result of mining meets condition 3, an alarm mining model is generated according to the current mining parameters corresponding to the result with the largest number of markers of mined specified alarms. That is to say, on the basis that not all the specified alarms have been mined, if the number of times for mining or parameters have reached the upper limit, the result with the largest number of markers of mined specified alarms can be considered as the optimal result of mining, and the corresponding mining parameters are considered as the optimal mining parameters, and an alarm mining model can be generated according to the mining parameters.

FIG. 2 depicts a schematic diagram showing an apparatus for determining an alarm mining model according to an embodiment of the present disclosure. As shown in FIG. 2, the apparatus includes a mining module 201, a marking module 202, and a generating module 203.

The mining module is configured to mine training data according to a plurality of initial full-scale mining parameters to acquire a set of all alarm correlation relations.

The marking module is configured to mark a specified alarm according to a rule base and a set of all alarm correlation relations.

The mining module is further configured to perform a specified alarm mining according to test data and a marked specified alarm.

The generating module is configured to generate an alarm mining model when the result of the mining meets a convergence condition.

In an embodiment, the marking module is configured to determine the result of the full-scale mining according to the set of all alarm correlation relations and the correlation relations between the faults and alarms in the rule base, and mark the mined specified alarms and the unmined specified alarms according to the specified alarms and the result of the full-scale mining, where the result of full-scale mining includes the mined alarms and the unmined alarms.

In an implementation, the above mining module is further configured to perform the following operations for specified alarm mining.

Operation 1, an initial value of a mining parameter of a marked specified alarm is determined, and the initial value of a mining parameter is taken as the current value of the mining parameter.

Operation 2, the specified alarm mining is performed according to the current value of the mining parameter and the test data to acquire a set of correlation relations of the specified alarm.

Operation 3, a marker of the specified alarm is updated according to the set of specified alarm correlation relations and the correlation relations between the faults and the alarms in the rule base.

Operation 4, the current mining parameters of the specified alarm are determined according to the updated mark of the specified alarm.

Operations 2 to 4 are repeated until all the specified alarms meet the convergence conditions.

In an embodiment, the mining module as described above includes a determining unit, a calculating unit.

The determining unit is configured to determine the values of the first mining parameters of the mined specified alarm and the unmined specified alarm.

The calculating unit is configured to calculate the value of the time window of the unmined specified alarm.

The determining unit is further configured to determine the initial value of a mining parameter of the marked specified alarm according to the values of the first mining parameters, the calculated time window, and the value of the time window of the mined specified alarm, that is, the mining module carries out the operation 1 as described above through the determining unit and the calculating unit.

The first mining parameter is the support and/or the confidence, and the value of the time window of the mined specified alarm is the initial setting value.

In an embodiment, the determining unit as described above is further configured to determine the current mining parameters of the specified alarm according to a negative direction in response to a presence of a marker of unmined specified alarm in the updated markers of the specified alarm; or, to determine the current mining parameters of the specified alarm according to a positive direction in response to a determination that the updated markers of the specified alarm are all the markers of mined specified alarms.

The negative direction indicates a decrease in the first mining parameter according to a preset step size and an increase in the value of the time window according to a preset time, while the positive direction indicates an increase in the first mining parameter according to a preset step size and a decrease in the value of time window according to a preset time.

In an implementation, the convergence condition in the process as described above can include any one of the following.

Condition 1: The markers of the last specified alarm mining are all markers of the mined specified alarms, and markers of the unmined specified alarm are present in the current specified alarm mining.

Condition 2: The markers of unmined specified alarms are present in the markers of specified alarms in the last mining, and markers of the specified alarm in the current mining are all markers of mined specified alarms.

Condition 3: the number of times of specified alarm mining or the mining parameters of specified alarms is greater than the corresponding threshold.

In an embodiment, the generating module is configured to generate an alarm mining model according to the current mining parameters corresponding to the result that the markers of specified alarms are all markers of mined specified alarms, when the result of the mining meets the above condition 1 or condition 2; or to generate an alarm mining model according to the current mining parameters corresponding to the result with the largest number of markers of mined specified alarms under the condition that the result of mining meets the above condition 3.

The apparatus for determining an alarm mining model according to this embodiment is configured to carry out the method for determining an alarm mining model as shown in FIG. 1, the principle of implementation and technical effect of the apparatus are similar to those of the method, and which will not be repeated here.

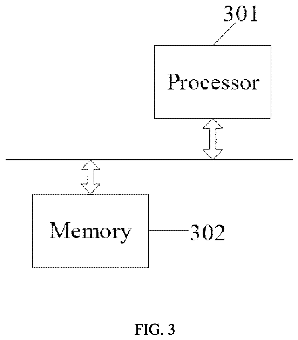

FIG. 3 depicts a schematic diagram showing a device according to an embodiment. As shown in FIG. 3, the device includes a processor 301 and a memory 302. One or more processors 301 can be provided in the device, and FIG. 3 shows one processor 301 by way of an example. The processor 301 and the memory 302 in the device can be connected by a bus or the like, and FIG. 3 shows the connection via the bus by way of an example.

As a computer-readable storage medium, the memory 302 can be configured to store software programs, computer-executable programs and modules, such as program instructions/modules corresponding to the method for determining an alarm mining model in the embodiment as shown in FIG. 1 of the present disclosure (e.g., the mining module 201, the marking module 202 and the generating module 203 in the apparatus for determining an alarm mining model). The processor 301 carries out the method for determining an alarm mining model as described above by execution of the software programs, instructions and modules stored in the memory 302.

The memory 302 can mainly include a storage program area and a storage data area, in which the storage program area can store an operating system and application programs required by at least one function. The storage area can store data created according to the use of the set-top box, etc. In addition, the memory 302 can include high-speed random-access memory and nonvolatile memory, such as at least one disk memory device, a flash memory device, or other nonvolatile solid-state memory devices.

An embodiment of the present disclosure further provides a readable and writable storage medium for computer storage, which stores one or more programs executable by one or more processors to carry out a method for determining an alarm mining model. The method includes the following operations.

Mining training data according to a plurality of initial full-scale mining parameters to acquire a set of all alarm correlation relations.

Marking a specified alarm according to a rule base and the set of all alarm correlation relations.

Performing a specified alarm mining according to test data and the marked specified alarm.

And generating an alarm mining model when the result of the mining meets a convergence condition.

It shall be appreciated by a person having ordinary skills in the art that all or some of the steps, functional modules/units in the methods disclosed above can be implemented as software, firmware, hardware and their appropriate combinations.

There are provided a method and an apparatus for determining an alarm mining model, a device, and a storage medium in some embodiments of the present disclosure. The method includes, mining training data according to an initial parameter of full-scale mining to acquire a set of all alarm correlation relations; marking a specified alarm according to a rule base and the set of all alarm correlation relations; performing a specified alarm mining according to test data and the marked specified alarm; and generating an alarm mining model in response to a result of mining meeting a convergence condition. Thereby, based on full-scale mining, the specified alarm mining is marked. On this basis, analysis and iteration are performed such that, the certainty of the alarm correlation relations is continuously enhanced, and the alarm mining model is acquired in a smart manner.

In the hardware implementation, the division between functional modules/units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to ta person having ordinary skills in the art that communication media usually contains computer-readable instructions, data structures, program modules or other data in modulated data signals such as carrier waves or other transmission mechanisms, and can include any information delivery media.

Some embodiments of the present disclosure have been illustrated above in conjunction with the drawings, and the present disclosure is not limited thereto. Any modifications, equivalents, alternations, or improvements, made within the scope of the present disclosure shall be included in the scope of the present disclosure.

## Claims

1. A method for determining an alarm mining model, comprising,
mining training data according to an initial parameter of full-scale mining to acquire a set of all alarm correlation relations;
marking a specified alarm according to a rule base and the set of all alarm correlation relations;
performing a specified alarm mining according to test data and the marked specified alarm; and
generating an alarm mining model in response to a result of mining meeting a convergence condition.

2. The method as claimed in claim 1, wherein, marking a specified alarm according to a rule base and the set of all alarm correlation relations comprises,
determining a result of full-scale mining according to the set of all alarm correlation relations, and correlation relations between faults and alarms in the rule base;
wherein, the result of the full-scale mining comprises a mined alarm and an unmined alarm; and
marking a mined specified alarm and an unmined specified alarm according to the specified alarm and the result of the full-scale mining.

3. The method as claimed in claim 1 or claim 2, wherein performing a specified alarm mining according to test data and the marked specified alarm comprises,
operation 1, determining an initial value of a mining parameter of a marked specified alarm, and taking the initial value of the mining parameter as a current value of the mining parameter;
operation 2, performing the specified alarm mining according to the current value of the mining parameter and the test data to acquire a set of correlation relations of the specified alarm;
operation 3, updating a marker of the specified alarm according to the set of correlation relations of the specified alarm, and the correlation relations between faults and alarms in the rule base; and
operation 4, determining the current value of the mining parameter of the specified alarm according to the updated marker of the specified alarm; and
wherein, the specified alarm is one of a plurality of the specified alarms, and operations 2 to 4 are repeated until each specified alarm meets the respective convergence condition.

4. The method as claimed in claim 3, wherein determining an initial value of a mining parameter of a marked specified alarm comprises,
determining a value of a first mining parameter of the mined specified alarm and the unmined specified alarm respectively;
calculating a value of a time window of the unmined specified alarm; and
determining the initial value of the mining parameter of the marked specified alarm according to the value of the first mining parameter of the of the mined specified alarm and the unmined specified alarm, the calculated value of the time window, and a value of a time window of the mined specified alarm; and
wherein, the first mining parameter is support and/or confidence, and the value of the time window of the mined specified alarm is an initial setting value.

5. The method as claimed in claim 3, wherein the updated marker of the specified alarm is one of a plurality of updated markers of the specified alarm, and determining the current value of the mining parameter of the specified alarm according to the updated marker of the specified alarm comprises,
determining the current value of the mining parameter of the specified alarm according to a negative direction, in response to a presence of a marker of unmined specified alarm in the updated markers of the specified alarm;
determining the current value of the mining parameter of the specified alarm according to a positive direction in response to each of the updated markers of the specified alarm being a marker of mined specified alarm;
wherein, the negative direction indicates a decrease in the first mining parameter according to a preset step size and an increase in the value of the time window according to a preset time, while the positive direction indicates an increase in the first mining parameter according to a preset step size and a decrease in the value of time window according to a preset time.

6. The method as claimed in claim 5, wherein the convergence condition comprises any one of,
condition 1: each marker of a last specified alarm mining is a marker of mined specified alarm, and a marker of unmined specified alarm is present in a current specified alarm mining; or
condition 2: a marker of unmined specified alarm is present in the markers of the specified alarm in the last mining, and each marker of the specified alarm in the current mining is a marker of mined specified alarm; or
condition 3: a number of times of specified alarm mining or a mining parameter of the specified alarm is greater than a corresponding threshold.

7. The method as claimed in claim 6, wherein generating an alarm mining model in response to a result of the specified alarm mining meeting a convergence condition comprises,
generating an alarm mining model according to a current mining parameter corresponding to a result that each marker of specified alarm is a marker of mined specified alarm, in response to the result of mining meeting the condition 1 or condition 2; or
generating an alarm mining model according to a current mining parameter corresponding to a result with a largest number of markers of mined specified alarm in response to the result of mining meeting the condition 3.

8. An apparatus for determining an alarm mining model, comprising,
a mining module configured to mine training data according to an initial parameter of full-scale mining to acquire a set of all alarm correlation relations;
a marking module configured to mark a specified alarm according to a rule base and the set of all alarm correlation relations;
the mining module further being configured to perform a specified alarm mining according to test data and a marked specified alarm; and
a generating module configured to generate an alarm mining model in response to a result of mining meeting a convergence condition.

9. A device, comprising a processor, a memory storing thereon a program executable by the processor, and a data bus for implementing connecting communication between the processor and the memory, wherein the program, when executed by the processor, causes the processor to carry out the method for determining an alarm mining model as claimed in any one of claim 1 to claim 7.

10. A readable and writable storage medium for computer storage, wherein the storage medium stores at least one program executable by at least one processor which, when executed by the processor, causes the processor to carry out the method for determining an alarm mining model as claimed in any one of claim 1 to claim 7.
